# EUROPÄISCHE PATENTSCHRIFT

(11) **EP 3 155 048 B1**
(45) Veröffentlichungstag und Bekanntmachung des Hinweises auf die Patenterteilung: **18.09.2019**
(21) Anmeldenummer: 15733648.8
(22) Anmeldetag: 12.06.2015
(51) Int. Cl.: C09C 1/30, C09D 5/16, C08K 9/06, C09D 5/14

(54) **MIT SILANHALTIGEN QUARTÄREM AMMONIUMSALZ MIT LANGER ALKYLKETTE DERIVATISIERTE SILIZIUMDIOXIDNANOPARTIKEL**
DERIVATIZED SILICON DIOXIDE NANOPARTICLES
NANOPARTICULES DE DIOXYDE DE SILICIUM TRANSFORMÉE EN DÉRIVÉ

(30) Priorität: 12.06.2014 DE 102014108278
(43) Veröffentlichungstag der Anmeldung: 19.04.2017
(73) Patentinhaber: Technische Universität Dortmund, 44227 Dortmund (DE)
(72) Erfinder: TILLER, Jörg Christian, 58313 Herdecke (DE); MÜLLER, Christoph, 45239 Essen (DE); RAUNER, Nicolas, 42369 Wuppertal (DE)
(74) Vertreter: Michalski Hüttermann & Partner Patentanwälte mbB
(86) Internationale Anmeldenummer: PCT/EP2015/063202
(87) Internationale Veröffentlichungsnummer: WO 2015/189405

(56) Entgegenhaltungen:
- SONG ET AL.: "Bacterial adhesion inhibition of the quaternary ammonium functionalized silica nanoparticles", COLLOIDS AND SURFACES B: BIOINTERFACES, Bd. 82, Nr. 2, 2011, Seiten 651-656, XP002745477, in der Anmeldung erwähnt
- WENLEI XIE, MINGLIANG FAN: "Biodiesel production by transesterification using tetraalkylammoniumhydroxides immobilized onto SBA-15 as a solid catalyst", CHEMICAL ENGINEERING JOURNAL, Bd. 239, 16. November 2013 (2013-11-16), Seiten 60-67, XP002745478, DOI: 10.1016/j.cej.2013.11.009
- YANBING WANG, CHENGUANG ZHOU, QIANNAN ZHANG, AND ZHIXIONG HUANG: "Synthesis of Fumed Silica Treated with Organosilane and ItsEffect on Epoxy Resin", POLYMER-PLASTICS TECHNOLOGY AND ENGINEERING, Bd. 52, 5. Februar 2013 (2013-02-05), Seiten 145-148, XP002745479, ISSN: 0360-2559, DOI: 10.1080/03602559.2012.734358
- A.A. TORKELSON,A.K. DA SILVA,D.C. LOVE,J.Y. KIM, J.P. ALPER,B. COOX,J. DAHM,P. KOZODOY, R. MABOUDIAN AND K.L. NELSON: "Investigation of quaternary ammonium silane-coated sand filter for the removal of bacteria and viruses from drinking water", JOURNAL OF APPLIED MICROBIOLOGY, Bd. 113, Nr. 5, 30. Dezember 2012 (2012-12-30), Seiten 1196-1207, XP002745480, DOI: 10.1111/j.1365-2672.2012.05411.

## Beschreibung

Die vorliegende Erfindung betrifft das Gebiet der derivatisierten Siliziumdioxidnanopartikel, insbesondere derartige Siliziumdioxidnanopartikel, die eine Biozid-Aktivität aufweisen. Derartige Substanzen spielen insbesondere bei der Vermeidung von Biofilmen eine Rolle. Künstlich hergestellte Werkstoffe besitzen gegenüber Mikroorganismen wie Bakterien, Pilzen oder Algen keinen eigenen Schutzmechanismus, sondern müssen demensprechend modifiziert werden. Besonders in feuchten Umgebungen ohne zusätzlichen Schutz finden Mikroorganismen beste Bedingungen zur Ausbreitung vor. Dabei kommt es durch die Zunahme der Zellzahl zur Ausbildung von Biofilmen auf den betroffenen Oberflächen. Bei Biofilmen handelt es sich meist um einen dreidimensionalen Zusammenschluss von Zellkolonien, der in eine extrazelluläre Matrix aus Polysacchariden eingebettet ist. Die extrazelluläre Matrix wird dabei von den Zellen selbst produziert.

Durch die Biofilmbildung auf den Materialoberflächen kommt es in vielen Bereichen zu erheblichen Problemen. Besonders betroffen sind dabei das öffentliche Gesundheitswesen, industrielle Prozesse, aber auch Produktoberflächen aus dem täglichen Leben wie z. B. in Feuchträumen, wie Kellern oder Badezimmern, sowie auf Lebensmittelverpackungen und Textilien. Problematisch ist auch eine Biofilmbildung an Schiffsrümpfen, da bereits ein 50 µm dicker Film einen Geschwindigkeitsverlust von 5 - 12 % zur Folge haben kann. Insbesondere Silikonoberflächen sind oft besonders anfällig gegenüber Biofilmbildungen. Verstärkt tritt die Zellanheftung an Oberflächen aus Silikonelastomeren auf, wenn diese dauerhaft warmen und feuchten Bedingungen ausgesetzt sind, wie z. B. auf Fugen in Badezimmern oder Küchen, die mit Silikon versiegelt sind.

Besonders schwerwiegend sind die Folgen in Bereichen, in denen die Mikroorgansimen einen direkten Einfluss auf die Gesundheit und die Umwelt der Menschen haben. Dazu zählt vor allem die Biofilmbildung im medizinischen Bereich. Dies ist unter anderem dadurch bedingt, dass sich oberflächengebundene Zellen vermehren und einen Biofilm bilden, wodurch sie ca. 1.000-mal resistenter gegenüber herkömmlichen Antibiotika sind, als vereinzelte, freibewegliche Zellen. Zudem ermöglich der Schutz durch die extrazelluläre Matrix ein Überleben der Zellen auch unter extremen Bedingungen. Dadurch, dass die Zellen in Biofilmen auch unterschiedliche Arten von Toxinen ausscheiden, sind Biofilme für viele Infektionskrankheiten verantwortlich

Eine Möglichkeit, derartige Biofilme zu vermeiden, besteht in der Bereitstellung von Oberflächen, die mit kontaktaktiv-antimikrobiellen, funktionellen Oberflächengruppen versehen sind. Wenn es sich dabei um hydrophobe Substanzen handelt, die der Materialoberfläche zusätzlich eine positive Gesamtladung verschafft, ist die biozide Wirkung besonders hoch. Als kontaktaktive-antimikrobielle Gruppen werden häufig quartäre Ammoniumverbindungen eingesetzt. Besonders geeignet sind dabei Verbindungen, die sowohl eine quartäre Ammoniumgruppe besitzen, als auch eine langkettige hydrophobe Alkylkette aufweisen. Dabei werden die Bakterien, die eine negative Nettoladung aufweisen im ersten Schritt von der positiven Oberflächenbeschichtung angezogen. Im zweiten Schritt sorgt der hydrophobe Teil der antimikrobiellen Substanz durch Eindringen in die Zellmembran der Mikroorganismen zur Perforation und somit zur Auflösung der Zelle. Im Gegensatz zu Biozid-freisetzenden Systemen ist hierbei eine Langzeitstabilität gewährleistet und es werden keine toxischen Materialien freigesetzt.

Ein entscheidender Faktor bei der Herstellung von kontaktaktiv-antimikrobiellen Oberflächen ist häufig die Gestaltung einer möglichst hohen Oberflächendichte an antimikrobiell wirksamen funktionellen Gruppen. Dabei zeigen oberflächenmodifizierte, antimikrobiell ausgestattete Nanopartikel ein hohes Potential, da sie im Vergleich zu ihrer Partikelgröße eine sehr große Oberfläche besitzen. Aufgrund der meist einfachen Synthese der Nanopartikel ist es möglich, neben der effizienten Oberflächenvergrößerung auch die Größe und die Morphologie der Partikel zu bestimmen. Dabei werden sogenannte Core/Shell-Systeme entwickelt, bei denen der Kern aus anorganischen Nanopartikeln mit einer Polymer-Hülle beschichtet wird. Dadurch können die Eigenschaften der antimikrobiellen Hülle, mit der hohen kolloidalen Stabilität des Kernmaterials verbunden werden. Als Kernmaterial werden häufig SiO₂-Nanopartikel verwendet, da durch geeignete Parameterwahl bei der Synthese eine kontrollierbare Partikelgröße mit geringer Polydispersität eingestellt werden kann. Zudem zeigen Silika-Partikel eine geringe Cytotoxicität.

Wie z.B. in Song et al., Bacterial adhesion inhibition of the quaternary ammonium functionalized silica nanoparticles, Colloids and Surfaces B: Biointerfaces, 82, Issue 2, 2011, S. 651-656 offenbart, existieren mehrere Möglichkeiten um SiO₂-Nanopartikel antimikrobiell zu beschichten und so ein kontaktaktiv-antimikrobielles Material mit einer großen aktiven Oberfläche herzustellen. Bei den bekannten Methoden handelt es sich jedoch einerseits stets um sehr aufwendige Verfahren, bei denen die notwendige kovalente Bindung zwischen Nanopartikeloberfläche und der antimikrobiell wirkenden Substanz entweder über eine Verwendung von komplizierten Initiatorsystemen gelingt, oder durch aufwendigen Syntheserouten mit oftmals aggressiven Chemikalien erreicht wird. Andererseits konnten bei vergleichsweise einfachen Syntheserouten oft nur unbefriedigende Ergebnisse erzielt werden, da eine hohe Oberflächendichte der antimikrobiell aktiven Substanzen zwingend notwendig ist. Dieser limitierender Faktor ist aufgrund unterschiedlicher Faktoren, wie die zu geringe Oberflächendichte an antimikrobiell aktiven Oberflächengruppen, oder zu geringen Stabilität durch Quervernetzung der funktionellen Gruppen, nur schwer auf einfachen und schonenden Syntheserouten zu erreichen. Untersuchungen zur Modifikation von Siliziumpartikeln finden sich bei Xie et al, Chemical Engineering Journal 2013, 60, Wang et al, Polymer-Plastics Technology and Engineering, 5 2013, 1545 und bei Torkelson et al, Journal of Applied Microbiology, 2013, 1196.

Es besteht somit die Notwendigkeit und die Aufgabe, verbesserte Siliziumdioxid-Nanopartikel bereitzustellen. Diese Aufgabe wird durch Anspruch 1 gelöst. Demgemäß werden mit einem silanhaltigen quartärem Ammoniumsalz mit langer Alkylkette beschichtete Siliziumdioxidnanopartikel vorgeschlagen, wobei die Beschichtung ≥0,01 bis ≤4 quartäre Amminogruppen pro nm² Oberfläche des jeweiligen Siliziumdioxidpartikels beträgt
Unter dem Begriff "Siliziumdioxidnanopartikel" im Sinne der vorliegenden Erfindung werden insbesondere monodisperse, meist sphärische Silica-Partikel mit (vor der Beschichtung) oberflächlichen OH-Gruppen verstanden, die aus Alkoxysilanen oder - chloriden durch einen Stöber-Prozess oder ähnlichem hergestellt wurden.

Bevorzugt weisen die Siliziumnanopartikel vor der Beschichtung einen durchschnittlichen Durchmesser von ≥5 nm bis ≤10 µm auf, noch bevorzugt ≥20 nm bis ≤2 µm, ferner bevorzugt ≥25 nm bis ≤ 800nm sowie am meisten bevorzugt ≥30 nm bis ≤300 nm. Die Durchmesser können mittels Raster-Elektronen-Mikroskopie (REM) bestimmt werden.

Weiterhin wird unter "langer Alkylkette" insbesondere eine substituierte oder unsubstituierte Kohlenstoffkette mit mindestens acht Kohlenstoffatomen verstanden.

Gemäß einer bevorzugten Ausführungsform der Erfindung beträgt die Beschichtung ≥0,05 bis ≤3, noch bevorzugt ≥0,1 bis ≤2, sowie am meisten bevorzugt ≥0,5 bis ≤1,5 quartäre Ammoniumgruppen pro nm². Dies kann durch photometrische Titration mittel Fluorescein bestimmt werden.

Die erfindungsgemäßen beschichteten Siliziumdioxidpartikel lassen sich durch mehrere Verfahren, die im Folgenden vorgestellt werden, synthetisieren. Diese sind auch unabhängig von den erfindungsgemäßen beschichteten Siliziumdioxidpartikeln von eigenständiger erfinderischer Bedeutung

Demgemäß wird ein Verfahren zum Beschichten von Siliziumdioxidnanopartikeln nach Anspruch 1 vorgeschlagen, umfassend die Schritte:
a) Vorlegen von Siliziumdioxidnanopartikeln und Lösemittel enthaltend ein unpolares Lösemittel
b) Zugeben eines silanhaltigen quartären Ammoniumsalzes mit langer Alkylkette, wobei die Temperatur bei Schritt b) zwischen ≥20°C und ≤100°C beträgt, wobei Schritt b) im Sauren erfolgt.

Durch dieses Verfahren hat es sich überraschenderweise herausgestellt, dass so hochfunktionalisierte bzw. hochoberflächenbeschichtete Siliziumdioxid-Nanopartikel hergestellt werden können. Insbesondere bietet das erfindungsgemäße Verfahren bei den meisten Ausführungsformen und konkreten Ausgestaltungen einen oder mehrere der folgenden Vorteile:
- Das Verfahren ist einfach auszuführen und benötigt keine komplizierten und aufwendigen Verfahrensschritte.
- Das Verfahren ist einfach hochskalierbar und somit auch großtechnisch einsetzbar.
- Das Verfahren benötigt nur kurze Reaktionszeiten
- Für das Verfahren werden nur Chemikalien benötigt, die zugelassen und großtechnisch verfügbar sind.
- Die durch das Verfahren hergestellten Partikel sind nach der Modifizierung dispergierbar.
- Das Verfahren ermöglicht eine selektive Modifizierung der Partikeloberfläche.

Nachfolgend werden die einzelnen Verfahrensschritte noch erläutert und weitere bevorzugte Ausführungsformen des erfindungsgemäßen Verfahrens vorgestellt.

### Schritt a)

In Schritt a) werden Siliziumdioxidnanopartikeln und Lösemittel vorgelegt.

Gemäß einer bevorzugten Ausführungsform beinhaltet das Verfahren einen Schritt a0), der vor Schritt a) durchgeführt wird:

### a0) Vorbehandeln der Siliziumdioxidnanopartikel

Dabei erfolgt Schritt a0) bevorzugt so, dass zunächst die Siliziumdioxidnanopartikel bei erhöhter Temperatur getrocknet und anschließend in saurer wässriger Lösung behandelt werden.

Bevorzugte Temperaturen sind dabei ≥600°C bis ≤1200°C, bevorzugt ≥800°C bis ≤1000°C, bevorzugte saure wässrige Lösung ist ≥1 Gew.-% bis ≤5 Gew,-% HCl-Lösung; die Behandlung findet bevorzugt bei Temperaturen von ≥70°C statt, bevorzugt mit Ultraschall.

Die Siliziumdioxidnanopartikel können je nach Anwendung in dem Lösemittel suspendiert oder als kolloidale Lösung vorliegen.

Vorzugsweise beträgt das Verhältnis von Siliziumdioxidpartikel zu Lösemittel (in mg/ml) von ≥0,1 mg/ml bis ≤500 mg/ml, bevorzugt ≥0,5 mg/ml bis ≤100 mg/ml, sowie am meisten bevorzugt ≥1 mg/ml bis ≤20 mg/ml. Diese Verhältnisse haben sich in der Praxis bewährt.

Das Lösemittel in Schritt a) enthält ein unpolares Lösemittel. Darunter werden insbesondere alle Lösemittel verstanden, die einen E_{T}-Wert von ≤40 aufweisen, gemäß der Definition nach Reichardt, Angew. Chemie 1979, 98-110.

Bevorzugte Lösemittel gemäß einer bevorzugten Ausgestaltungsform der Erfindung sind dabei Toluol, Xylol, Mesitylen oder Mischungen daraus.

Bevorzugt besteht das Lösemittel im Wesentlichen aus Toluol.

Der Term "im wesentlichen" im Sinne der vorliegenden Erfindung bedeutet dabei mind. 50 (Gew.-)%, bevorzugt mind. 75 (Gew.-), noch bevorzugt mind. 80 (Gew.-)% sowie am meisten bevorzugt mind. 83 (Gew.-)%.

Es sei darauf hingewiesen, dass gemäß einer alternativen aber ebenso bevorzugten Ausführungsform der Erfindung das Lösemittel ein Lösemittelgemisch sein kann. Bevorzugte weitere Lösemittel neben dem unpolaren Lösemittel sind dabei Methanol, Ethanol, Butanol, n-Propanol, Isopropanol sowie Alkane, insbesondere Pentan, Hexan und Heptan oder Mischungen dieser Verbindungen in Anteilen bis 17 (Gew.-)%, bevorzugt bis 20 (Gew.-)%, noch bevorzugt bis 25 (Gew.-)% sowie am meisten bevorzugt bis 50 (Gew.-)%.

Bevorzugt beträgt der Temperaturunterschied zwischen Schritt a) und Schritt b) weniger als 5°C, bevorzugt weniger als 3°C, d.h. Schritt a) wird im Wesentlichen bei ähnlichen Temperaturen durchgeführt wie nachfolgend Schritt b).

### Schritt b)

Gemäß Schritt b) wird ein silanhaltiges quartäres Ammoniumsalz mit langer Alkylkette zugegeben.

Gemäß einer bevorzugten Ausführungsform der vorliegenden Erfindung umfasst das silanhaltige quartäre Ammoniumsalz eine Verbindung mit folgender Struktur und/oder besteht im wesentliche aus einer Verbindung mit folgender Struktur: 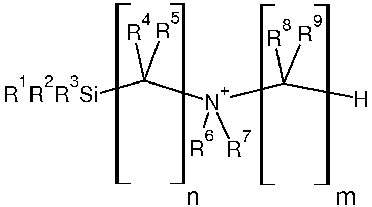
wobei R¹, R², R³ unabhängig voneinander ausgewählt sind aus der Gruppe enthaltend Hydroxy, Alkoxy, Aryloxy, Halogen, Pseudohalogen, Ester;
R⁴,R⁵, R⁸, R⁹ unabhängig voneinander - für den Fall, dass n und/oder m größer 1 sind, jeweils für jedes Kohlenstoffatom der Kette unabhängig von den anderen - ausgewählt sind aus der Gruppe enthaltend Wasserstoff, Alkyl, Aryl,
R⁶, R⁷ unabhängig voneinander ausgewählt sind aus der Gruppe enthaltend Alkyl, Aryl,
und n eine ganze Zahl zwischen ≥1 und ≤5 beträgt sowie m eine ganze Zahl von ≥8 und ≤30.

Bevorzugt sind dabei R¹, R², R³ unabhängig voneinander ausgewählt aus der Gruppe enthaltend Methoxy, Ethoxy, Propyloxy (n- oder iso-), Chlorid, Bromid, besonders bevorzugt Methoxy und/oder Ethoxy.

R⁴,R⁵, R⁸, R⁹ sind bevorzugt jeweils Wasserstoff.

R⁶, R⁷ sind unabhängig voneinander ausgewählt aus der Gruppe enthaltend Methyl, Ethyl, Phenyl, bevorzugt Methyl.

n ist bevorzugt 2 bis 4, bevorzugt 3. m ist bevorzugt eine ganze Zahl von ≥10 und ≤25, bevorzugt ≥15 und ≤20, sowie am meisten bevorzugt 16, 17 oder 18, insbesondere 18.

Schritt b) wird außerdem im Sauren durchgeführt. Darunter wird insbesondere verstanden, dass zumindest während der Initialisierung von Schritt b) mehr Säure als Base vorhanden ist.

Bevorzugte Konzentrationen sind bei vollständiger Säurezugabe (s. a. nachfolgend Schritt b0) 1 bis 20 Vol.% 1 M Säure, bevorzugt 2 bis 15 Vol.% 1 M Säure, noch bevorzugt 3 bis 10 Vol.% 1 M Säure, sowie am meisten bevorzugt 4 bis 6 Vol.% 1 M Säure, bezogen auf eine einprotonige Säure. Dies hat sich in der Praxis bewährt. Die verwendete Säure ist bevorzugt eine starke Säure, insbesondere bevorzugt HCl oder H₂SO₄ (im letzteren Fall wären dann die vorig angegebenen Konzentrationen zu halbieren, da H₂SO₄ eine zweiprotonige Säure ist).

Gemäß einer bevorzugten Ausführungsform beinhaltet das Verfahren einen Schritt b0), der vor Schritt b) durchgeführt wird:

### b0) Ansäuern der des silanhaltigen quartären Ammoniumsalzes

Dabei erfolgt Schritt b0) bevorzugt so, dass die Säure dem silanhaltigen quartären Ammoniumsalz vor dessen Zugabe zu den Siliziumdioxidnanopartikeln zugegeben wird.

Bevorzugt wird Schritt b) so durchgeführt, dass das silanhaltige quartäre Ammoniumsalz mit langer Alkylkette innerhalb eines Zeitraums von ≥10 s zugegeben wird, bevorzugt innerhalb eines Zeitraums von ≥1 min und ≤60 min, bevorzugt ≥10 min und ≤30 min. Dies hat sich bei den meisten Anwendungen bewährt.

Bevorzugt wird Schritt b) bei einer Temperatur von bevorzugt ≥30°C und ≤80°C, besonders bevorzugt ≥50°C und ≤70°C durchgeführt. Dies hat sich in der Praxis besonders bewährt.

Bevorzugt wird in Schritt b) die Temperatur konstant gehalten, d.h. die Temperaturschwankung während Schritt b) ist ≤10°C, bevorzugt ≤5°C. Dies hat sich besonders bewährt, da so meist eine verbesserte Beladung der Teilchen erreicht werden kann. Die Temperatur kann bei den meisten Anwendungen insbesondere durch die Geschwindigkeit der Zugabe des silanhaltigen quartären Ammoniumsalzes mit langer Alkylkette gesteuert werden, da dies meist eine exotherme Reaktion ist.

Gemäß einer bevorzugten Ausführungsform der vorliegenden Erfindung wird die Reaktion unter Inertbedingungen durchgeführt.

Gemäß einer bevorzugten Ausführungsform der vorliegenden Erfindung wird das silanhaltige quartäre Ammoniumsalz mit langer Alkylkette ohne Lösemittel zugegeben und/oder vorhandenes Lösemittel zuvor zumindest teilweise entfernt. Dies hat sich oftmals als zweckmäßig erwiesen, da so bei vielen Anwendungen eine besonders hohe Beladung erreicht werden kann.

Da viele silanhaltige quartäre Ammoniumsalze mit langer Alkylkette gemäß der vorliegenden Erfindung in Lösung bzw. Suspension kommerziell erhältlich sind, bedeutet der Term "ohne Lösemittel" insbesondere dass das silanhaltige quartäre Ammoniumsalze mit langer Alkylkette für ≥30 min., bevorzugt bei einer Temperatur zwischen ≥20°C und ≤50°C getrocknet wird. Dies kann bevorzugt im Vakuum (≤ 10 mbar, bevorzugt ≤ 5 mbar) geschehen.

Gemäß einer bevorzugten Ausführungsform der Erfindung wird das Verfahren so geführt, dass nach vollständiger Zugabe das Verhältnis von silanhaltigem quartärem Ammoniumsalz mit langer Alkylkette zu Siliziumdioxidnanopartikeln von ≥1:1 (Gew./Gew.), bevorzugt ≥5:1, noch bevorzugt ≥10:1, ferner bevorzugt ≥30:1, sowie am meisten bevorzugt ≥50:1. Die Obergrenze liegt bevorzugt bei ≤500:1, bevorzugt ≤250:1. Dies hat sich in der Praxis bewährt.

Gemäß einer bevorzugten Ausführungsform der Erfindung wird das Verfahren so geführt, dass nach vollständiger Zugabe die Konzentration von Siliziumdioxidnanopartikeln ≥0,1 bis ≤10 Gew.-% beträgt, vorzugsweise ≥0,5 bis ≤2 Gew.-%.

Gemäß einer bevorzugten Ausführungsform der Erfindung wird das Verfahren so geführt, dass nach vollständiger Zugabe die Konzentration von silanhaltigem quartären Ammoniumsalz ≥1 bis ≤25 Gew.-% beträgt, vorzugsweise ≥5 bis ≤15 Gew.-%.

Gemäß einer bevorzugten Ausführungsform der Erfindung umfasst das Verfahren noch einen Schritt c), der nach Schritt b) durchgeführt wird:

### c) Rühren der Mischung für ≥10 min

Bevorzugt wird Schritt c) bei derselben Temperatur wie Schritt b) durchgeführt; die Rührzeit beträgt gemäß einer bevorzugten Ausführungsform der Erfindung ≥20 min noch bevorzugt ≥30 min.

Dies hat sich bei vielen Ausführungsformen der vorliegenden Erfindung als hilfreich herausgestellt, da so die Beladung nochmals erhöht werden kann.

Gemäß einer bevorzugten Ausführungsform der Erfindung umfasst das Verfahren noch einen Schritt d), der nach Schritt b) bzw. ggf. c) durchgeführt wird:

### d) Entfernen des Lösemittels

Dies hat sich bei vielen Ausführungsformen der vorliegenden Erfindung ebenfalls als hilfreich zur weiteren Vergrößerung der Oberflächenbeladung herausgestellt.

Schritt d) wird bevorzugt so durchgeführt, dass für eine ausreichende Zeit, meist ≥10 min. , bevorzugt bei einer Temperatur zwischen ≥20°C und ≤50°C, ein Vakuum von ≤ 10 mbar, bevorzugt ≤ 5 mbar, noch bevorzugt ≤ 2 mbar angelegt wird.

Alternativ kann auch bei erhöhten Temperaturen ohne Vakuum gearbeitet werden. Bevorzugt wird Schritt d) bis zur Trocknung durchgeführt.

Gemäß einer bevorzugten Ausführungsform der Erfindung umfasst das Verfahren noch einen Schritt e), der nach Schritt b) bzw. ggf c) und/oder d) durchgeführt wird:

### e) Aufreinigung der Siliziumdioxidnanopartikel, insbesondere Entfernen des überschüssigen silanhaltigen quartären Ammoniumsalzes mit langer Alkylkette

Dies geschieht bevorzugt dergestalt, dass ein polares Lösemittel, bevorzugt ein Alkohol, wie Methanol und/oder Ethanol und/oder ein unpolares Lösungsmittel, bevorzugt Toluol zugegeben wird, ggf. durch Behandlung mit Ultraschall eine Dispergierung erreicht wird und anschließend z.B. mittels einer Zentrifuge oder per Ultrafiltration das überschüssige silanhaltige quartäre Ammoniumsalz von den Siliziumdioxidnanopartikeln getrennt wird.

Weiterhin wird ein Verfahren zum Beschichten von Siliziumdioxidnanopartikeln nach Anspruch 1 vorgeschlagen, umfassend die Schritte:
a) Synthese von Siliziumnanopartikeln in einem polaren Lösemittel
b) Zugeben eines silanhaltigen quartären Ammoniumsalzes mit langer Alkylkette, wobei die Temperatur bei Schritt b) zwischen ≥20°C und ≤100°C beträgt und Schritt b) im Sauren durchgeführt wird.

Durch dieses Verfahren hat es sich ebenfalls überraschenderweise herausgestellt, dass so hochfunktionalisierte bzw. hochoberflächenbeschichtete Siliziumdioxid-Nanopartikel hergestellt werden können. Insbesondere bietet das erfindungsgemäße Verfahren bei den meisten Ausführungsformen und konkreten Ausgestaltungen einen oder mehrere der folgenden Vorteile:
- Das Verfahren ist einfach auszuführen und benötigt keine komplizierten und aufwendigen Verfahrensschritte.
- Das Verfahren ist einfach hochskalierbar und somit auch großtechnisch einsetzbar.
- Das Verfahren benötigt nur kurze Reaktionszeiten
- Für das Verfahren werden nur Chemikalien benötigt, die zugelassen und großtechnisch verfügbar sind.
- Die durch das Verfahren hergestellten Partikel sind nach der Modifizierung dispergierbar.
- Das Verfahren ermöglicht eine selektive Modifizierung der Partikeloberfläche.

Auch dieses Verfahren wird im Folgenden erläutert, wobei - wenn nicht anders angegeben und für den Fachmann nicht unmittelbar ausgeschlossen - die Bedingungen und Spezifikationen *mutatis mutandis* für das erste Verfahren auch auf dieses übertragen werden können.

### Schritt a) Synthese der Siliziumdioxidnanopartikel

Unter dem Begriff "Siliziumdioxidnanopartikel" im Sinne der vorliegenden Erfindung werden insbesondere monodisperse, meist sphärische Silica-Partikel mit oberflächlichen OH-Gruppen verstanden, die aus Alkoxysilanen oder -chloriden durch einen Stöber-Prozess oder ähnlichem hergestellt wurden.

Bevorzugt weisen die Siliziumnanopartikel einen durchschnittlichen Durchmesser von ≥5 nm bis ≤10 µm auf, noch bevorzugt ≥20 nm bis ≤2 µm, ferner bevorzugt ≥25 nm bis ≤ 800nm sowie am meisten bevorzugt ≥30 nm bis ≤500 nm. Die Durchmesser können über die Reaktionstemperatur beeinflusst und mittels Raster-Elektronen-Mikroskopie (REM) bestimmt werden.

Die Siliziumdioxidnanopartikel können nach der Herstellung in dem Lösemittel suspendiert oder als kolloidale Lösung vorliegen.

Bevorzugt wird Schritt b) bei einer Temperatur von bevorzugt ≥25°C und ≤80°C, besonders bevorzugt ≥35°C und ≤70°C durchgeführt. Dies hat sich in der Praxis besonders bewährt.

Vorzugsweise beträgt die Konzentration von dem zur Herstellung benötigtem Tetraethoxysilan (TEOS) zu Lösemittel ≤ 25 Gew.% , bevorzugt ≤ 20 Gew.%, sowie am meisten bevorzugt ≤ 15 Gew.%1. Diese Verhältnisse haben sich in der Praxis bewährt.

Vorzugsweise beträgt die Konzentration von der zur Herstellung benötigten Ammoniaklösung zu Lösemittel (in Gew.%) ≤ 20 Gew.% , bevorzugt ≤ 15 Gew.%, sowie am meisten bevorzugt ≤ 10 Gew.%1. Diese Verhältnisse haben sich in der Praxis bewährt.

Das Lösemittel in Schritt a) enthält bevorzugt ein polares Lösemittel. Darunter werden insbesondere alle Lösemittel verstanden, die einen E_{T}-Wert von > 40 kcal/mol aufweisen, gemäß der Definition nach Reichardt, Angew. Chemie 1979, 98-110.

Bevorzugte Lösemittel gemäß einer bevorzugten Ausgestaltungsform der Erfindung sind dabei Ethanol, Methanol, Wasser oder Mischungen daraus.

Bevorzugt besteht das Lösemittel im Wesentlichen aus Ethanol.

Die Rührzeit nach der Zugabe des Silans beträgt gemäß einer bevorzugten Ausführungsform der Erfindung ≥20 min noch bevorzugt ≥60 min, besonders bevorzugt ≥120 min.

Gemäß Schritt b) wird ein silanhaltiges quartäres Ammoniumsalz mit langer Alkylkette zugegeben. Die Zugabe erfolgt dabei mutatis mutandis zu Schritt b) im obigen Verfahren

Gemäß einer bevorzugten Ausführungsform der Erfindung folgt Schritt b) direkt auf Schritt a). Dies hat sich besonders bewährt. Die maximale Verzögerung beträgt bevorzugt ≤2h, noch bevorzugt weniger als ≤1h.

Die vorliegende Erfindung bezieht sich außerdem auf ein Verfahren zum Beschichten einer Oberfläche mit den erfindungsgemäßen mit silanhaltigen quartärem Ammoniumsalz beschichtete Siliziumdioxidnanopartikel bzw. mit den gemäß dem vorliegenden erfindungsgemäßen Verfahren beschichteten Siliziumdioxidnanopartikel. Hierzu kommen je nach Ausgestaltung die folgenden Verfahren in Frage:
- Verstreichen / Pinseln
- Besprühen / Spritzen
- Spin Coating
- Rollen
- Tupfen / Stempeln
- Gießen
- Tauchen

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung, in der - beispielhaft - mehrere Ausführungsbeispiele des erfindungsgemäßen Verfahrens dargestellt sind. Diese sind rein illustrativ und nicht beschränkend zu verstehen.

### BEISPIEL I:

### a) Synthese der Siliziumdioxidnanopartikel

Eine Mischung aus 368 ml Ethanol und 29,2 ml Ammoniaklösung (25 %) wurden in einem abgedichteten Dreihalskolben vorgelegt. Das Gemisch aus Ammoniaklösung und Ethanol wurde anschließend unter starkem Rühren mithilfe eines Rührfisches auf 47°C erwärmt. Nachdem die Temperatur konstant blieb wurden 11,9 ml Tetraethoxysilan zugegeben. Anschließend wurde das Gemisch für 4 h gerührt bei 47°C gerührt, danach auf RT abgekühlt und weitere 16 h gerührt. Die hergestellten Partikel wurden im weiteren Verlauf aufgearbeitet. Dazu wurden jeweils 40 ml des Reaktionsgemisches in ein 50 ml Falcon-Tube gegeben, bei 6.000 U/min für 15 Minuten zentrifugiert und die gebildeten SiO₂-Nanopartikel von dem flüssigen Reaktionsrückstand abgetrennt. Nach der ersten Zentrifugation wurde der flüssige Überstand aus den Zentrifugengefäßen vorsichtig abdekantiert, so dass möglichst keine Partikel von der flüssigen Phase mitgerissen wurden. Anschließend wurden die Silika-Partikel zur Entfernung von zurückgebliebenen Rückständen 3-mal mit Ethanol gewaschen und abzentrifugiert. Danach erfolgte eine Trocknung der aufgereinigten SiO₂-Nanopartikel für ca. 4 Stunden im Vakuum bei Raumtemperatur und einem Druck von ca. 1 mbar. Die Partikel wurden im Anschluss bei 900°C im Ofen für 16 h getempert, danach in einem Mörser zerkleinert. Nach Dispergierung der Partikel mit Ultraschall in einer 3 %-igen HCl-Lösung bei 80°C wurden die Partikel 2 Stunden in derselben Lösung unter Rückfluss gekocht. Im Anschluss wurden die Partikel wiederum 4-mal gewaschen und abzentrifugiert (2-mal mit Wasser und 2-mal mit Ethanol) und bei 180°C im Vakuumtrockenschrank bei ca. 5 mbar für 16 h getrocknet.

### b) Beschichten der Siliziumdioxidnanopartikel

Es wurden 51,2 mg der unter a) hergestellten Siliziumdioxidnanopartikel in ein Rollrandglas gegeben und für 30 Minuten bei Raumtemperatur im Vakuum (ca. 1 mbar) getrocknet. Anschließend wurden 5 ml Toluol zu den getrockneten Siliziumdioxidnanopartikel zugegeben. Die Partikel wurden dann für 30 Minuten mit Hilfe einer Ultraschalllanze bei Raumtemperatur dispergiert. Das Gemisch aus Siliziumdioxidnanopartikel und Toluol wurde vor Schritt b) auf 70 °C erhitzt.

Als silanhaltiges quartärem Ammoniumsalz mit langer Alkylkette wurde 3-(Trimethoxysilyl)-propyloctadecyldimethylammoniumchlorid verwendet, welches unter dem Namen DOW 5700 als Lösung in Methanol kommerziell erhältlich ist.

Vor der Zugabe wurden 2,75 g des in Methanol gelagerten DOW 5700 in ein Rollrandglas gegeben, mit 1 ml Methanol sowie 0,1 ml 1 M Salzsäure versetzt und für ca. 1 Stunde lang im Vakuum (ca. 80 mbar, 20°C) gerührt. Nach der Vakuumbehandlung lag der Gewichtsverlust durch den teilweisen Abzug des Methanols bei ca. 5,2 Gew.-%. Anschließend wurde der Rest DOW 5700 Gemisches mit einer Spritze tropfenweise (1 Tropfen (10 µl) pro Sekunde), zu den in Toluol dispergierten Partikeln unter Ultraschallbehandlung (Pulsbetrieb) zugegeben, die Gesamtdauer der Zugabe betrug ca. 10 min. Während der Zugabe des DOW 5700 wurde das Gemisch weiterhin gerührt und die Reaktionstemperatur dabei konstant bei 70 °C gehalten.

Nachdem das DOW 5700 zugegeben wurde, wurde das Gemisch für weitere 30 Minuten im Ultraschall und bei 70 °C behandelt. Abschließend wurde das Toluol bei Raumtemperatur und bei ca. 1 mbar im Vakuum von dem Reaktionsgemisch abgezogen. Die Probe wurde dazu ca. 30 Minuten im Vakuum gehalten.

Zur Abtrennung der erfindungsgemäß beschichteten Siliziumdioxidnanopartikel von dem überschüssigen DOW 5700 wurden zunächst 5 ml Methanol zu dem Reaktionsgemisch hinzugegeben. Zum Dispergieren der Partikel wurde das Gemisch für 10 Minuten mit der Ultraschalllanze bei Raumtemperatur behandelt. Anschließend wurden weitere 15 ml Methanol dazugegeben und die Partikel wurden mit einer Zentrifuge von dem überschüssigen QAS, abgetrennt. Die Zentrifuge wurde dabei für 15 Minuten bei 6.000 rpm betrieben. Nach der Zentrifugation wurde das überschüssige Methanol abdekantiert. Zur vollständigen Entfernung des ungebundenen DOW 5700 wurde wiederum 20 ml Methanol zu den Partikeln hinzugegeben. Die Partikel wurde dann mit Hilfe der Ultraschalllanze innerhalb von 10 Minuten bei Raumtemperatur dispergiert.

Insgesamt wurden die Partikel dreimal mit Methanol gewaschen und zwischendurch jeweils mittels Ultraschall dispergiert. Die Siliziumdioxidnanopartikel wurden zum Abschluss des Aufreinigungsschrittes bei Raumtemperatur und unter Normaldruck getrocknet. Die Beladung der Siliziumdioxidnanopartikel mit silanhaltigen quartärem Ammoniumsalz betrug 6,8 nmol/cm² oder 1 Gruppe pro nm².

### Beispiel II

### a) Synthese der Siliziumdioxidnanopartikel

Eine Mischung aus 33,4 ml Ethanol und 2,8 ml Ammoniaklösung (25 %) wurden in einem abgedichteten Dreihalskolben vorgelegt. Das Gemisch aus Ammoniaklösung und Ethanol wurde anschließend unter starkem Rühren mithilfe eines Rührfisches auf 50°C erwärmt. Nachdem die Temperatur konstant blieb wurden 1,07 ml Tetraethoxysilan zugegeben. Nach einer Reaktionszeit von 4 h wurde das Gemisch auf Raumtemperatur abgekühlt und für weitere 16 h gerührt.

### b) Beschichten der Siliziumdioxidnanopartikel

Zu der hergestellten Partikeldispersion aus a) wurden sofort weitere 8,5 ml Ethanol und 0,7 ml Ammoniaklösung zugegeben und das Gemisch wurde auf 70°C erwärmt.

Als silanhaltiges quartäres Ammoniumsalz mit langer Alkylkette wurde 3-(Trimethoxysilyl)-propyloctadecyldimethylammoniumchlorid verwendet, welches unter dem Namen DOW 5700 als Lösung in Methanol kommerziell erhältlich ist.

Nachdem sich eine konstante Temperatur eingestellt hatte, wurden unter starkem Rühren 0,608 ml DOW 5700 zugegeben. Nach 10 Minuten wurde der pH Wert durch kontinuierliche Zugabe von konzentrierter Salzsäure (32 Gew.%) von pH 11 auf pH 4 titriert. Nach weiteren 90 Minuten Reaktionszeit war die Reaktion beendet und es folgte die Aufreinigung.

Zur Abtrennung der erfindungsgemäß beschichteten Siliziumdioxidnanopartikel von dem überschüssigen DOW 5700 wurden zunächst 5 ml Methanol zu dem Reaktionsgemisch hinzugegeben. Zum Dispergieren der Partikel wurde das Gemisch für 10 Minuten mit der Ultraschalllanze bei Raumtemperatur behandelt. Anschließend wurden weitere 15 ml Methanol dazugegeben und die Partikel wurden mit einer Zentrifuge von dem überschüssigen QAS, abgetrennt. Die Zentrifuge wurde dabei für 15 Minuten bei 6.000 rpm betrieben. Nach der Zentrifugation wurde das überschüssige Methanol abdekantiert. Zur vollständigen Entfernung des ungebundenen DOW 5700 wurde wiederum 20 ml Methanol zu den Partikeln hinzugegeben. Die Partikel wurde dann mit Hilfe der Ultraschalllanze innerhalb von 10 Minuten bei Raumtemperatur dispergiert.

Insgesamt wurden die Partikel dreimal mit Methanol gewaschen und zwischendurch jeweils mittels Ultraschall dispergiert. Die Siliziumdioxidnanopartikel wurden zum Abschluss des Aufreinigungsschrittes bei Raumtemperatur und unter Normaldruck getrocknet. Die Beladung der Siliziumdioxidnanopartikel mit silanhaltigen quartärem Ammoniumsalz betrug 6,8 nmol/cm² oder 1 Gruppe pro nm².

### Messung der Beladung (Allgemeine Vorschrift):

Auf einen mit Silikon beschichteten Objektträger wird eine Suspension der zu untersuchenden Silica-Partikeln aufgetragen. Nach Abdampfen des Lösungsmittels wird der Objektträger für 5 Minuten in eine 1%ige Fluorescein-Natrium Lösung (in destilliertem Wasser) getaucht. Anschließend wird der Objektträger zuerst mit destilliertem Wasser gewaschen bis die Waschlösung keine Färbung mehr aufzeigt. Durch eine verbleibende Färbung des Films wird ein Vorhandensein von quartären Ammoniumgruppen angezeigt.

Zur Quantifizierung wird der Objektträger in 25 ml einer wässrigen 0,1 %igen Cetyltrimethylammoniumbromid-Lösung überführt. Nach 5-minütigem Schütteln erfolgt die Zugabe von 2,5 ml eines 0,1 M wässrigen Phosphat-Puffers (eingestellt auf pH 8,0). Die Bestimmung der Extinktion wird mittels UV-Vis-Spektroskopie bei 501 nm durchgeführt, woraus die Konzentration der quartären Ammoniumgruppen nach c = E/ε^{∗}d berechnet wird (d = 1cm, Extinktionskoeffizient ε 77 mM-1 cm-1). Die Oberflächendichte wird nach c^{∗}V/A berechnet (V Volumen der Waschlösung, A Fläche der Beschichtung mit den Partikeln).

### VERGLEICHSBEISPIEL: Reproduktion der Synthese nach Song et al.

Die Reproduktion der Synthese nach Song et al. erfolgte unter Verwendung von Partikeln mit einem Durchmesser von 60 nm. 1 g der Partikel wurden in 100 ml eines 1:1 (v/v) Gemisches aus Wasser und Ethanol in einem 250 ml Kolben dispergiert und anschließend 0,5 ml DOW 5700 zugegeben. Die leicht trübe Dispersion wurde 24 h bei 25°C gerührt. Nach dieser Zeit war ein weißer Niederschlag zu erkennen, der sich beim Abschalten des Rührers auf dem Boden absetzte. Die Aufreinigung erfolgte, wie in der Vorschrift angegeben, mittels Zentrifugation. Dazu wurde die Dispersion in drei 50 ml Falcon-Tubes überführt und bei 6000 rpm für 10 Minuten zentrifugiert. Die überstehende flüssige Phase wurde durch Dekantieren entfernt und der verbleibende Rückstand in jedem der Falcon-Tubes mit 45 ml destilliertem Wasser aufgefüllt, danach geschüttelt und erneut zentrifugiert. Dieser Vorgang wurde insgesamt noch 2-mal wiederholt. Anschließend wurden die modifizierten Partikel mittels Feinvakuum für 12 h getrocknet.

Da sich DOW 5700 nicht in Wasser löst, wurde ein Teil der hergestellten Partikel zusätzlich noch dreimal mit Methanol gewaschen und zentrifugiert.

Die mit Wasser als auch die zusätzlich mit Methanol gewaschenen Proben wurden in 50 ml Methanol dispergiert und davon 1 ml auf je einen mit Silikon beschichteten Objektträger aufgetragen. Nach Abdampfen des Lösungsmittels wurde die Dichte der quartären Ammoniumgruppen mittels des literaturbekannten Fluorescein-Tests bestimmt. Dabei waren mittels des Tests keine quartären Ammoniumgruppen auf dem die Objektträger mit den Methanol-gewaschenen Partikeln nachzuweisen. Dies zeigt, dass die Modifizierung nach Song et al. nicht zu einer kovalenten Anbindung des DOW 5700 an die Silicapartikel führt.

## Patentansprüche

1. Mit silanhaltigen quartärem Ammoniumsalz mit langer Alkylkette beschichtete Siliziumdioxidnanopartikel, wobei die Beschichtung ≥0,01 bis ≤4 quartäre Ammoniumgruppen pro nm² Oberfläche des Siliziumdioxidpartikels beträgt und wobei die lange Alkylkette eine substituierte oder unsubstituierte Kohlenstoffkette mit mindestens acht Kohlenstoffatomen ist.

2. Verfahren zum Beschichten von Siliziumdioxidnanopartikeln zur Herstellung von Siliziumdioxidnanopartikeln gemäß Anspruch 1, umfassend die Schritte
a) Vorlegen von Siliziumdioxidnanopartikeln und Lösemittel enthaltend ein unpolares Lösemittel
b) Zugeben eines silanhaltigen quartären Ammoniumsalzes mit langer Alkylkette, wobei die Temperatur bei Schritt b) zwischen ≥20°C und ≤100°C beträgt und Schritt b) im Sauren durchgeführt wird.

3. Verfahren nach Anspruch 2, wobei Schritt b) so geführt wird, dass das silanhaltige quartäre Ammoniumsalz mit langer Alkylkette innerhalb eines Zeitraums von ≥10 s zugegeben wird

4. Verfahren nach Anspruch 2 oder 3, wobei die Siliziumnanopartikel einen durchschnittlichen Durchmesser von ≥30 nm bis ≤2µm aufweisen

5. Verfahren nach einem der Ansprüche 2 bis 4, wobei das silanhaltige quartäre Ammoniumsalz mit langer Alkylkette eine Verbindung mit folgender Struktur umfasst und/oder im Wesentlichen aus einer Verbindung mit folgender Struktur besteht: 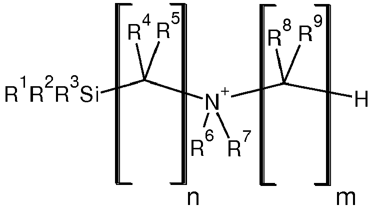
wobei R¹, R², R³ unabhängig voneinander ausgewählt sind aus der Gruppe enthaltend Hydroxy, Alkoxy, Aryloxy, Halogen, Pseudohalogen, Ester;
R⁴,R⁵, R⁸, R⁹ unabhängig voneinander - für den Fall, dass n und/oder m größer 1 sind, jeweils für jedes Kohlenstoffatom der Kette unabhängig von den anderen - ausgewählt sind aus der Gruppe enthaltend Wasserstoff, Alkyl, Aryl,
R⁶, R⁷ unabhängig voneinander ausgewählt sind aus der Gruppe enthaltend Alkyl, Aryl, und n eine ganze Zahl zwischen ≥1 und ≤5 beträgt sowie m eine ganze Zahl von ≥8 und ≤30.

6. Verfahren nach einem der Ansprüche 2 bis 5, wobei das Verhältnis von Siliziumdioxidnanopartikeln zu silanhaltigem quartärem Ammoniumsalz mit langer Alkylkette von ≥1:1 bis ≤1:250 beträgt

7. Verfahren nach einem der Ansprüche 2 bis 6, wobei das Verfahren so geführt, dass nach vollständiger Zugabe in Schritt b) die Konzentration von Siliziumdioxidnanopartikeln ≥0,1 bis ≤10 Gew.-% beträgt

8. Verfahren nach einem der Ansprüche 2 bis 7, wobei das Verfahren so geführt wird, dass nach vollständiger Zugabe in Schritt b) die Konzentration von silanhaltigem quartären Ammoniumsalz ≥1 bis ≤25 Gew.-% beträgt.

9. Verfahren nach einem der Ansprüche 2 bis 8, wobei das Verfahren noch einen Schritt d) umfasst, der nach Schritt b) durchgeführt wird
d) Entfernen des Lösemittels

10. Verfahren zur Synthese von beschichteten Siliziumdioxidnanopartikeln gemäß Anspruch 1, umfassend die Schritte:
a) Synthese von Siliziumdioxidnanopartikeln in einem polaren Lösemittel
b) Zugeben eines silanhaltigen quartären Ammoniumsalzes mit langer Alkylkette, wobei die Temperatur bei Schritt b) zwischen ≥20°C und ≤100°C beträgt und Schritt b) im Sauren durchgeführt wird;
wobei die maximale Verzögerung zwischen Schritt a) und b) ≤ 2h beträgt.

## Claims

1. Silicon dioxide nanoparticles coated with a silane-containing quaternary ammonium salt which has a long alkyl chain, wherein the coating amounts to ≥0.01 to ≤4 quaternary ammonium groups per nm² of surface area of the silicon dioxide particle, and wherein the long alkyl chain is a substituted or unsubstituted carbon chain having at least eight carbon atoms.

2. Method for coating silicon dioxide nanoparticles for the production of silicon dioxide nanoparticles according to Claim 1, comprising the steps of
a) initially charging silicon dioxide nanoparticles and solvent containing a non-polar solvent,
b) adding a silane-containing quaternary ammonium salt which has a long alkyl chain, wherein the temperature in step b) is between ≥20°C and ≤100°C and step b) is conducted under acidic conditions.

3. Method according to Claim 2, wherein step b) is carried out such that the silane-containing quaternary ammonium salt which has a long alkyl chain is added within a time period of ≥10 s.

4. Method according to Claim 2 or 3, wherein the silicon nanoparticles have an average diameter of ≥30 nm to ≤2 µm.

5. Method according to any of Claims 2 to 4, wherein the silane-containing quaternary ammonium salt which has a long alkyl chain comprises a compound having the following structure and/or consists essentially of a compound having the following structure: 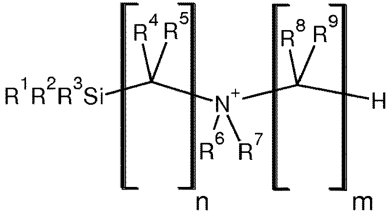
wherein R¹, R², R³ are each independently selected from the group comprising hydroxy, alkoxy, aryloxy, halogen, pseudohalogen, ester;
R⁴, R⁵, R⁸, R⁹ are each independently selected from the group comprising hydrogen, alkyl, aryl - each independently selected for each carbon atom of the chain independently of the others in the event that n and/or m are greater than 1,
R⁶, R⁷ are each independently selected from the group comprising alkyl, aryl,
and n is an integer between ≥1 and ≤5 and m is an integer of ≥8 and ≤30.

6. Method according to any of Claims 2 to 5, wherein the ratio of silicon dioxide nanoparticles to silane-containing quaternary ammonium salt which has a long alkyl chain is from to ≤1:250.

7. Method according to any of Claims 2 to 6, wherein the method is carried out such that after complete addition in step b) the concentration of silicon dioxide nanoparticles is ≥0.1 to ≤10% by weight.

8. Method according to any of Claims 2 to 7, wherein the method is carried out such that after complete addition in step b) the concentration of silane-containing quaternary ammonium salt is ≥1 to ≤25% by weight.

9. Method according to any of Claims 2 to 8, wherein the method additionally comprises a step d) which is conducted after step b)
d) removing the solvent.

10. Method for synthesizing coated silicon dioxide nanoparticles according to Claim 1, comprising the steps of
a) synthesizing silicon dioxide nanoparticles in a polar solvent,
b) adding a silane-containing quaternary ammonium salt which has a long alkyl chain, wherein the temperature in step b) is between ≥20°C and ≤100°C and step b) is conducted under acidic conditions;
wherein the maximum delay between steps a) and b) is ≤2 h.

## Revendications

1. Nanoparticule de dioxyde de silicium revêtue avec un sel d'ammonium quaternaire à chaîne alkyle longue contenant un silane, dans laquelle le revêtement est de ≥ 0,01 à ≤ 4 groupes ammonium quaternaires par nm² de surface de la particule de dioxyde de silicium et dans laquelle la chaîne alkyle longue est une chaîne carbonée substituée ou non substituée contenant au moins huit atomes de carbone.

2. Procédé de revêtement de nanoparticules de dioxyde de silicium pour la fabrication de nanoparticules de dioxyde de silicium selon la revendication 1, comprenant les étapes suivantes :
a) le chargement de nanoparticules de dioxyde de silicium et de solvants contenant un solvant apolaire,
b) l'ajout d'un sel d'ammonium quaternaire à chaîne alkyle longue contenant un silane, la température à l'étape b) étant comprise entre ≥ 20 °C et ≤ 100 °C, et l'étape b) étant réalisée en milieu acide.

3. Procédé selon la revendication 2, dans lequel l'étape b) est réalisée de telle sorte que le sel d'ammonium quaternaire à chaîne alkyle longue contenant un silane est ajouté en une durée ≥ 10 s.

4. Procédé selon la revendication 2 ou 3, dans lequel les nanoparticules de silicium présentent un diamètre moyen de ≥ 30 nm à ≤ 2 µm.

5. Procédé selon l'une quelconque des revendications 2 à 4, dans lequel le sel d'ammonium quaternaire à chaîne alkyle longue contenant un silane comprend un composé ayant la structure suivante et/ou est essentiellement constitué par un composé ayant la structure suivante : 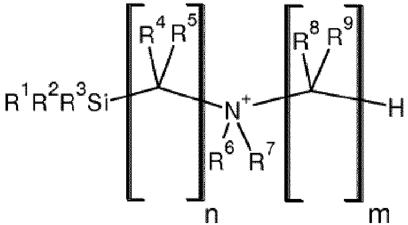
dans laquelle R¹, R², R³ sont choisis indépendamment les uns des autres dans le groupe contenant hydroxy, alcoxy, aryloxy, halogène, pseudohalogène, ester ;
R⁴, R⁵, R⁸, R⁹ sont choisis indépendamment les uns des autres, dans le cas où n et/ou m sont supérieurs à 1, pour chaque atome de carbone de la chaîne indépendamment des autres, dans le groupe contenant hydrogène, alkyle, aryle,
R⁶, R⁷ sont choisis indépendamment l'un de l'autre dans le groupe contenant alkyle, aryle,
et n est un nombre entier compris entre ≥ 1 et ≤ 5, et m est un nombre entier ≥ 8 et ≤ 30.

6. Procédé selon l'une quelconque des revendications 2 à 5, dans lequel le rapport entre les nanoparticules de dioxyde de silicium et le sel d'ammonium quaternaire à chaîne alkyle longue contenant un silane est de ≥ 1:1 à ≤ 1:250.

7. Procédé selon l'une quelconque des revendications 2 à 6, dans lequel le procédé est réalisé de telle sorte que la concentration en nanoparticules de dioxyde de silicium soit de ≥ 0,1 à ≤ 10 % en poids après l'ajout complet à l'étape b).

8. Procédé selon l'une quelconque des revendications 2 à 7, dans lequel le procédé est réalisé de telle sorte que la concentration en sel d'ammonium quaternaire contenant un silane soit de ≥ 1 à ≤ 25 % en poids après l'ajout complet à l'étape b).

9. Procédé selon l'une quelconque des revendications 2 à 8, dans lequel le procédé comprend en outre une étape d), qui est réalisée après l'étape b) : d) l'élimination du solvant.

10. Procédé de synthèse de nanoparticules de dioxyde de silicium revêtues selon la revendication 1, comprenant les étapes suivantes :
a) la synthèse de nanoparticules de dioxyde de silicium dans un solvant polaire,
b) l'ajout d'un sel d'ammonium quaternaire à chaîne alkyle longue contenant un silane, la température à l'étape b) étant comprise entre ≥ 20 °C et ≤ 100 °C, et l'étape b) étant réalisée en milieu acide ;
le délai maximal entre l'étape a) et l'étape b) étant ≤ 2 h.
